# EUROPÄISCHE PATENTSCHRIFT

(11) **EP 3 368 370 B1**
(45) Veröffentlichungstag und Bekanntmachung des Hinweises auf die Patenterteilung: **28.12.2022**
(21) Anmeldenummer: 16782051.3
(22) Anmeldetag: 14.10.2016
(51) Int. Cl.: F21S 41/143, F21S 41/151, B60Q 1/24, B60Q 1/32

(54) **KRAFTFAHRZEUG UND UMFELDBELEUCHTUNGSEINRICHTUNG FÜR EIN KRAFTFAHRZEUG**
MOTOR VEHICLE AND DEVICE TO ILLUMINATE A VEHICLE SURROUNDINGS
VÉHICULE AUTOMOBILE ET DISPOSITIF D'ILLUMINATION DE L'ENVIRONNEMENT D'UN VÉHICULE

(30) Priorität: 27.10.2015 DE 102015220911
(43) Veröffentlichungstag der Anmeldung: 05.09.2018
(73) Patentinhaber: Bayerische Motoren Werke Aktiengesellschaft, 80809 München (DE)
(72) Erfinder: GOCKE, Tim, 80796 München (DE); SIELER, Marcel, Menlo Park 94025 (US)
(86) Internationale Anmeldenummer: PCT/EP2016/074708
(87) Internationale Veröffentlichungsnummer: WO 2017/071973

(56) Entgegenhaltungen:
- EP-A2- 2 674 328
- DE-A1-102006 036 061
- DE-A1-102013 211 877
- DE-U1-202011 000 429
- US-A1- 2007 053 195

## Beschreibung

Die Erfindung betrifft eine Umfeldbeleuchtungseinrichtung für ein Kraftfahrzeug zur Erzeugung einer Lichtverteilung auf dem Boden in der Umgebung des Kraftfahrzeugs.

Es ist bekannt, in den Türaußengriff eines Fahrzeugs eine Umfeldbeleuchtungseinrichtung zu integrieren, welche bei der Entriegelung des Fahrzeugs aktiviert wird. Ebenso gibt es Ausstiegsbeleuchtungen, die in der Unterkante der Türverkleidung eines Kraftfahrzeugs eingebaut sind. Umfeldbeleuchtungen im Türaußengriff und Ausstiegsbeleuchtungen weisen den Nachteil auf, dass sie nur bei geschlossener bzw. bei offener Tür sichtbar sind.

Aus der Druckschrift DE 10 2013 211 877 A1 ist eine Umfeldbeleuchtungseinrichtung unter Verwendung eines Projektionsmoduls aus einem Array aus Projektionsoptiken bekannt. Es werden Lichtmuster, wie z.B. Streifenmuster, auf dem Boden im Umfeld des Kraftfahrzeugs projiziert. Das Projektionsmodul eignet sich nur zur Generierung einer einzelnen vorbestimmten Lichtverteilung.

Die Druckschrift EP 2 674 328 A2 beschreibt ein Verfahren zum Beleuchten eines Bereichs im Vorfeld und/oder im Innenraum eines Kraftfahrzeugs. Dabei können unterschiedliche Lichtverteilungen durch die Verwendung von verschiedenen Projektoren generiert werden.

Aufgabe der Erfindung ist es, eine Umfeldbeleuchtungseinrichtung für ein Kraftfahrzeug zu schaffen, welche einfach und effizient mehrere unterschiedliche Lichtverteilungen am Boden im Umfeld des Kraftfahrzeugs generieren kann.

Diese Aufgabe wird durch die Umfeldbeleuchtungseinrichtung gemäß Patentanspruch 1 gelöst. Weiterbildungen der Erfindung sind in abhängigen Ansprüchen definiert.

Die erfindungsgemäße Umfeldbeleuchtungseinrichtung ist für ein Kraftfahrzeug vorgesehen, welches insbesondere ein PKW ist, und dient zur Erzeugung einer Lichtverteilung auf dem Boden in der Umgebung des Kraftfahrzeugs, wobei die Umfeldbeleuchtungseinrichtung ein Projektionsmodul und ggf. mehrere Projektionsmodule aufweist. Ein jeweiliges Projektionsmodul umfasst ein Leuchtmittel mit einer Anzahl von Lichtquellen und ein Array aus Projektionsoptiken, wobei eine jeweilige Projektionsoptik eine Objektstruktur und eine zugehörige Projektionslinse umfasst, so dass bei Beleuchtung des Arrays mit dem Leuchtmittel die Objektstrukturen durch die zugehörigen Projektionslinsen auf dem Boden in der Umgebung des Kraftfahrzeugs projiziert werden und hierdurch die Lichtverteilung erzeugt wird. Als Lichtquellen im Projektionsmodul werden vorzugsweise eine oder mehrere LEDs und ggf. auch eine oder mehrere Laserdioden eingesetzt.

Vorzugsweise wird in der erfindungsgemäßen Umfeldbeleuchtungseinrichtung ein Projektionsmodul verwendet, welches auf der Technologie des Projektionsdisplays beruht, das in dem Dokument DE 10 2009 024 894 A1 bzw. in dem Dokument DE 10 2011 076 083 A1 beschrieben ist. Im Unterschied zu dem dort offenbarten Projektionsdisplay ist das Array aus Projektionsoptiken in mehrere Teilarrays zur Generierung unterschiedlicher Lichtverteilungen aufgeteilt, wie im Folgenden noch näher erläutert wird. Der gesamte Offenbarungsgehalt der soeben genannten beiden Druckschriften wird durch Verweis zum Inhalt dieser Anmeldung gemacht.

Erfindungsgemäß umfasst das Array aus Projektionsoptiken mehrere Teilarrays, welche separat mit zumindest einer dem jeweiligen Teilarray zugeordneten Lichtquelle (vorzugsweise einer einzelnen Lichtquelle) des Leuchtmittels beleuchtbar sind. Das Array weist zumindest zwei unterschiedliche Arten von Teilarrays auf, welche bei Beleuchtung mit der zumindest einen zugeordneten Lichtquelle unterschiedliche Projektionen auf dem Boden im Umfeld des Kraftfahrzeugs generieren. Mit anderen Worten erzeugt jede Art von Teilarray bei entsprechender Beleuchtung mit den zugeordneten Lichtquellen eine andere Projektion als die restlichen Arten von Teilarrays. Dabei sind die Objektstrukturen der Projektionsoptiken innerhalb eines jeweiligen Teilarrays identisch, wobei sich die Objektstrukturen der Projektionsoptiken der unterschiedlichen Arten von Teilarrays jedoch voneinander unterscheiden.

In dem Array aus Projektionsoptiken sind eine erste Anzahl von Teilarrays (z.B. ein einzelnes Teilarray) und eine zweite Anzahl von Teilarrays (z.B. ein einzelnes Teilarray) vorgesehen. Diese sind derart ansteuerbar, dass bei eingeschalteter Umfeldbeleuchtungseinrichtung ausschließlich die erste Anzahl von Teilarrays durch Anschalten der zugeordneten Lichtquelle oder Lichtquellen der Teilarrays der ersten Anzahl aktiviert sein kann oder ausschließlich die zweite Anzahl von Teilarrays durch Anschalten der zugeordneten Lichtquelle oder Lichtquellen der Teilarrays der zweiten Anzahl aktiviert sein kann.

Erfindungsgemäß ist die erste Anzahl von Teilarrays derart ausgestaltet, dass bei dessen Aktivierung ein Lichtmuster auf dem Boden im Umfeld des Kraftfahrzeugs erzeugt wird, wohingegen die zweite Anzahl der Teilarrays derart ausgestaltet ist, dass bei dessen Aktivierung eine homogene Lichtverteilung auf dem Boden im Umfeld des Kraftfahrzeugs erzeugt wird. Hier und im Folgenden ist unter Lichtmuster eine in der Helligkeit variierende Lichtverteilung und insbesondere eine Hell-Dunkel-Verteilung zu verstehen, wohingegen eine homogene Lichtverteilung eine kontinuierlich ausgeleuchtete Fläche mit im Wesentlichen konstanter Helligkeit darstellt.

Die Erfindung weist den Vorteil auf, dass durch Verwendung verschiedener Teilarrays mit entsprechender Ansteuerung sowohl ein Lichtmuster als auch eine homogene Lichtverteilung generiert werden kann. Die homogene Lichtverteilung bietet eine sehr gute Ausleuchtung des Bodens im Umfeld des Kraftfahrzeugs, so dass auf zusätzliche optische Umfeldbeleuchtungen, die beispielsweise im Türgriff des Kraftfahrzeugs integriert sind, verzichtet werden kann. Durch das im Fahrzeug verbaute Projektionsmodul wird dabei sowohl die Darstellung von präzisen Grafiken im Umfeld des Fahrzeugs als auch die Wiedergabe einer gleichmäßigen Lichtverteilung gewährleistet.

Je nach Ausgestaltung des Projektionsmoduls kann in dem Array eine unterschiedliche Anzahl von Projektionsoptiken vorgesehen sein, z.B. zwischen 100 und 200 Projektionsoptiken. Ebenso kann die Größe der einzelnen Projektionslinsen verschieden gewählt werden. Vorzugsweise weist eine jeweilige Projektionslinse einen Durchmesser von 2000 µm oder weniger auf.

In einer besonders bevorzugten Ausführungsform ist ein jeweiliges Projektionsmodul derart ausgestaltet, dass jede Projektionsoptik eines entsprechenden Teilarrays ein Einzelbild auf den Boden projiziert, das im Wesentlichen die gesamte, mit dem Teilarray generierte Lichtverteilung abdeckt, wobei die Lichtverteilung eine Überlagerung der Einzelbilder der Projektionsoptiken des entsprechenden Teilarrays ist.

In einer weiteren bevorzugten Ausführungsform wird zur Generierung des Lichtmusters bzw. der homogenen Lichtverteilung Weißlicht verwendet. Das Leuchtmittel bzw. die Lichtquellen erzeugen somit Weißlicht.

In einer weiteren zweckmäßigen Ausgestaltung sind im Projektionsmodul eine oder mehrere Blenden vorgesehen, welche derart angeordnet sind, dass das Licht der zumindest einen zugeordneten Lichtquelle eines jeweiligen Teilarrays ausschließlich auf das jeweilige Teilarray fällt. Hierdurch wird auf eine einfache Weise eine Separierung der Lichtquellen voneinander erreicht.

In einer besonders bevorzugten Ausführungsform besteht die erste Anzahl von Teilarrays aus einem oder mehreren gleichen Teilarrays einer ersten Art, welche bei Beleuchtung mit der oder den zugeordneten Lichtquellen das Lichtmuster erzeugen. Demgegenüber besteht die zweite Anzahl von Teilarrays aus einem oder mehreren gleichen Teilarrays einer zweiten Art, die unterschiedlich zu der ersten Art ist, wobei die Teilarrays dieser zweiten Anzahl von Teilarrays bei Beleuchtung mit der oder den zugeordneten Lichtquellen die homogene Lichtverteilung generieren. Hierdurch können auf besonders einfache Weise unterschiedliche Lichtverteilungen erzeugt werden. Dabei sind die erste Anzahl und die zweite Anzahl von Teilarrays jeweils separat für die Generierung des Lichtmusters bzw. der homogenen Lichtverteilung verantwortlich.

In einer weiteren Ausgestaltung der Erfindung besteht die erste Anzahl von Teilarrays aus einem oder mehreren gleichen Teilarrays einer ersten Art, welche bei Beleuchtung mit der oder den zugeordneten Lichtquellen das Lichtmuster erzeugen. Im Unterschied zu der zuvor beschriebenen Ausführungsform besteht demgegenüber die zweite Anzahl von Teilarrays aus der ersten Anzahl von Teilarrays und ergänzend aus einem oder mehreren gleichen Teilarrays einer zweiten Art, wobei sich die zweite Art wiederum von der ersten Art unterscheidet. Das oder die Teilarrays der zweiten Art erzeugen bei Beleuchtung mit der oder den zugeordneten Lichtquellen ein Lichtmuster, das zu dem Lichtmuster komplementär ist, welches durch das oder die Teilarrays der ersten Art erzeugt werden. Komplementär bedeutet, dass die hellen Bereiche des entsprechenden Lichtmusters in dem komplementären Lichtmuster dunkel sind und dass die dunklen Bereiche des entsprechenden Lichtmusters in dem komplementären Lichtmuster hell sind. Mit anderen Worten ergänzen sich bei der Beleuchtung aller Teilarrays der zweiten Anzahl von Teilarrays die Lichtmuster derart, dass hierdurch die homogene Lichtverteilung generiert wird.

In einer weiteren Abwandlung der Erfindung sind das generierte Lichtmuster und/oder die homogene Lichtverteilung mit einem oder mehreren Symbolen überlagert. Hierdurch können graphische Effekte in den Lichtverteilungen generiert werden.

In einer weiteren Ausgestaltung decken das Lichtmuster und die homogene Lichtverteilung im Wesentlichen die gleiche Fläche am Boden ab.

Gegebenenfalls können mit der erfindungsgemäßen Umfeldbeleuchtungseinrichtung auch mehrere unterschiedliche Muster generiert werden. In diesem Fall sind mehrere erste Anzahlen von Teilarrays vorgesehen, welche derart ansteuerbar sind, dass bei eingeschalteter Umfeldbeleuchtungseinrichtung ausschließlich eine erste Anzahl von Teilarrays durch Anschalten der zugeordneten Lichtquelle oder Lichtquellen aktiviert sein kann.

Neben der erfindungsgemäßen Umfeldbeleuchtungseinrichtung betrifft die Erfindung ein Kraftfahrzeug mit der erfindungsgemäßen Umfeldbeleuchtungseinrichtung oder mit einer oder mehreren bevorzugten Varianten der erfindungsgemäßen Umfeldbeleuchtungseinrichtung.

In einer bevorzugten Ausführungsform des erfindungsgemäßen Kraftfahrzeugs ist das Projektionsmodul in einem sich in die Karosserie des Kraftfahrzeugs erstreckenden Lichtschacht angeordnet, wodurch eine direkte Blendung durch das Leuchtmittel des Projektionsmoduls vermieden wird.

In einer weiteren Ausgestaltung des erfindungsgemäßen Kraftfahrzeugs kann die Einbauposition des Projektionsmoduls im Kraftfahrzeug justiert werden, d.h. es ist ein entsprechendes Justagemittel vorgesehen. Dieses Justagemittel kann je nach Anwendungsfall eine manuelle und/oder automatische Justierung der Einbauposition ermöglichen. Auf diese Weise können Fertigungstoleranzen bei der Integration des Projektionsmoduls im Fahrzeug berücksichtigt werden und die entsprechende Lichtverteilung durch Justierung der Einbauposition des Projektionsmoduls immer scharf abgebildet werden.

Das für das erfindungsgemäße Kraftfahrzeug generierte Lichtmuster kann unterschiedlich ausgestaltet sein. In einer Variante ist das Lichtmuster ein Streifenmuster, wobei vorzugsweise die Dichte der Streifen in eine vorbestimmte Richtung am Boden mit zunehmendem Abstand des Streifenmusters von der Einbauposition des Projektionsmoduls im Kraftfahrzeug abnimmt. Auf diese Weise können mit dem Lichtmuster ansprechende Effekte generiert werden.

In einer weiteren Ausgestaltung des erfindungsgemäßen Kraftfahrzeugs umfasst das Lichtmuster ein Muster aus Punkten und/oder aus graphischen Elementen, wie z.B. Logos. Vorzugsweise nimmt die Dichte der Punkte und/oder graphischen Elemente in eine vorbestimmte Richtung am Boden mit zunehmendem Abstand des Musters von der Einbauposition des oder der Projektionsmodule im Kraftfahrzeug ab. Demgegenüber nimmt der Durchmesser der Punkte und/oder graphischen Elemente in eine vorbestimmte Richtung am Boden mit zunehmendem Abstand des Musters von der Einbauposition des Projektionsmoduls vorzugsweise zu.

In einer besonders bevorzugten Ausführungsform des erfindungsgemäßen Kraftfahrzeugs können die Punkte des Punktmusters benachbart zu der Einbauposition des Projektionsmoduls zunächst einen Durchmesser von 3 mm aufweisen, wobei dieser Durchmesser dann kontinuierlich auf 40 mm zunimmt. Ebenso kann der Punkteabstand zunächst nur im Bereich von ca. 4 bis 5 mm liegen und dann kontinuierlich mit größerem Abstand von der Einbauposition auf 40 mm zunehmen.

In einer weiteren Ausgestaltung des erfindungsgemäßen Kraftfahrzeugs wird das Lichtmuster an einem entfernten Ende von der Einbauposition des Projektionsmoduls im Kraftfahrzeug unscharf und/oder nimmt in seiner Helligkeit ab.

In einer weiteren bevorzugten Variante des erfindungsgemäßen Kraftfahrzeugs weiten sich das Lichtmuster und/oder die homogene Lichtverteilung entlang einer vorbestimmten Richtung am Boden mit zunehmendem Abstand des Lichtmusters und/oder der homogenen Lichtverteilung von der Einbauposition des Projektionsmoduls im Kraftfahrzeug auf.

Das Anschalten der Umfeldbeleuchtungseinrichtung im erfindungsgemäßen Fahrzeug kann an unterschiedliche Ereignisse gekoppelt sein. Insbesondere kann das Anschalten an ein Entriegeln einer Zentralverriegelung und/oder an ein Öffnen einer Zugangstür des Kraftfahrzeugs gekoppelt sein. Ferner kann die Aktivierung der ersten und/oder zweiten Anzahl von Teilarrays durch ein Aufdimmen der zugeordneten Lichtquelle oder Lichtquellen der Teilarrays der entsprechenden Anzahl erfolgen.

In einer weiteren bevorzugten Ausgestaltung der Erfindung wird mittels eines Sensors des erfindungsgemäßen Kraftfahrzeugs Regen und/oder Dunkelheit detektiert, wobei im Falle von Regen und/oder Dunkelheit bei Anschalten der Umfeldbeleuchtungseinrichtung ausschließlich die homogene Lichtverteilung durch Aktivierung der zweiten Anzahl von Teilarrays erzeugt wird. Man macht sich hierbei die Erkenntnis zunutze, dass bei Dunkelheit bzw. Regen das Umfeld des Kraftfahrzeugs möglichst gleichmäßig ausgeleuchtet sein sollte, um den Einstieg bzw. den Ausstieg von Personen zu erleichtern und insbesondere zu verhindern, dass diese in Wasserpfützen treten. Demgegenüber kann im Falle, dass weder Regen noch Dunkelheit detektiert wird, ggf. immer das Lichtmuster anstelle der homogenen Lichtverteilung durch das Projektionsmodul erzeugt werden.

In einer weiteren bevorzugten Ausgestaltung der Erfindung ist die Umfeldbeleuchtungseinrichtung über eine Benutzerschnittstelle im erfindungsgemäßen Kraftfahrzeug dahingehend konfigurierbar, ob die homogene Lichtverteilung oder das Lichtmuster beim Anschalten der Umfeldbeleuchtungseinrichtung erzeugt werden soll. Falls mehrere unterschiedliche Lichtmuster durch das Projektionsmodul erzeugbar sind, kann über die Benutzerschnittstelle ggf. auch festgelegt werden, welches der Lichtmuster generiert werden soll. In einer weiteren bevorzugten Variante kann über die Benutzerschnittstelle auch festgelegt werden, unter welchen Bedingungen bzw. basierend auf welchen Ereignissen die homogene Lichtverteilung oder das bzw. eines der Lichtmuster erzeugt werden soll.

Das Projektionsmodul der Umfeldbeleuchtungseinrichtung ist in einer bevorzugten Variante des erfindungsgemäßen Kraftfahrzeugs derart im Bereich einer Zugangstür des Kraftfahrzeugs angebracht, dass das Lichtmuster und/oder die homogene Lichtverteilung im Öffnungsbereich der Zugangstür erzeugt werden, wobei das Lichtmuster und/oder die homogene Lichtverteilung vorzugsweise nicht durch das Öffnen der Zugangstür verändert bzw. abgeschattet werden. Die Zugangstür ist vorzugsweise eine Personeneinstiegstür. In dieser Variante der Erfindung wird die Sicherheit beim Ein- bzw. Ausstieg von Personen aus dem Kraftfahrzeug durch eine gute Ausleuchtung des Bodens vor dem Personeneinstieg erhöht.

In einer weiteren Variante ist das Projektionsmodul in einem Türschweller des erfindungsgemäßen Kraftfahrzeugs vorgesehen, insbesondere an einer Einbauposition, welche in Längsrichtung des Kraftfahrzeugs vom vorderen zum hinteren Ende vor einer Personeneinstiegstür liegt.

In einer weiteren, besonders bevorzugten Ausführungsform des erfindungsgemäßen Kraftfahrzeugs ist das Projektionsmodul derart im Kraftfahrzeug angeordnet ist, dass sich das Lichtmuster und/oder die homogene Lichtverteilung auf einer Seite des Kraftfahrzeugs im Wesentlichen entlang einer Fahrer- oder Beifahrereinstiegstür und einer dahinter liegenden Einstiegstür für Fond-Passagiere erstrecken. Vorzugsweise sind Umfeldbeleuchtungseinrichtungen mit entsprechendem Projektionsmodul auf beiden Seiten des Kraftfahrzeugs vorgesehen.

Alternativ oder zusätzlich besteht die Möglichkeit, dass in dem erfindungsgemäßen Kraftfahrzeug eine Umfeldbeleuchtungseinrichtung verbaut ist, deren Projektionsmodul im Betrieb ein Lichtmuster und/oder eine homogene Lichtverteilung unterhalb und/oder in Längsrichtung des Kraftfahrzeugs hinter einer Kofferraumzugangstür generiert. Der Begriff der Kofferraumzugangstür ist weit zu verstehen und kann neben dem Kofferraumdeckel einer Stufenheck-Limousine auch die Heckklappe eines Fahrzeugs mit Fließheck bzw. Steilheck bzw. Schrägheck umfassen.

In einer weiteren Variante des erfindungsgemäßen Kraftfahrzeugs zeigt das Lichtmuster und/oder die homogene Lichtverteilung auf dem Boden das Detektionsfeld eines drahtlosen Sensors an, wobei das Detektionsfeld vorzugsweise ein Bedienfeld ist, so dass bei Einbringen von Körperteilen und/oder Gegenständen in das Bedienfeld einer Bedienaktion im Kraftfahrzeug automatisch ausgelöst wird. In einer bevorzugten Variante ist der drahtlose Sensor derart ausgestaltet, dass bei einer Detektion eines Fußes in dem Detektionsfeld der Kofferraumzugangstür automatisch entriegelt und/oder geöffnet wird.

Ausführungsbeispiele der Erfindung werden nachfolgend anhand der beigefügten Figuren detailliert beschrieben.

Es zeigen:
- Fig. 1: eine Seitenansicht eines erfindungsgemäßen Kraftfahrzeugs mit einer Umfeldbeleuchtungseinrichtung;
- Fig. 2: eine Draufsicht auf das Kraftfahrzeug der Fig. 1;
- Fig. 3: eine schematische Detailansicht der in Fig. 1 gezeigten Umfeldbeleuchtungseinrichtung;
- Fig. 4: eine Ansicht der Umfeldbeleuchtungseinrichtung aus Fig. 3 gesehen in Längsrichtung des Kraftfahrzeugs;
- Fig. 5: eine schematische Darstellung einer Schnittansicht durch das in den vorhergehenden Figuren gezeigte Projektionsmodul; und
- Fig. 6 bis Fig. 9: verschiedene Varianten von Lichtmustern und homogenen Lichtverteilungen, welche mit Ausführungsformen der Erfindung generiert werden können.

Nachfolgend wird eine Ausführungsform eines erfindungsgemäßen Kraftfahrzeugs mit einer Umfeldbeleuchtungseinrichtung beschrieben, welche im Türschweller des Kraftfahrzeugs integriert ist und zur seitlichen Beleuchtung des Bereichs neben den Personeneinstiegstüren des Kraftfahrzeugs dient.

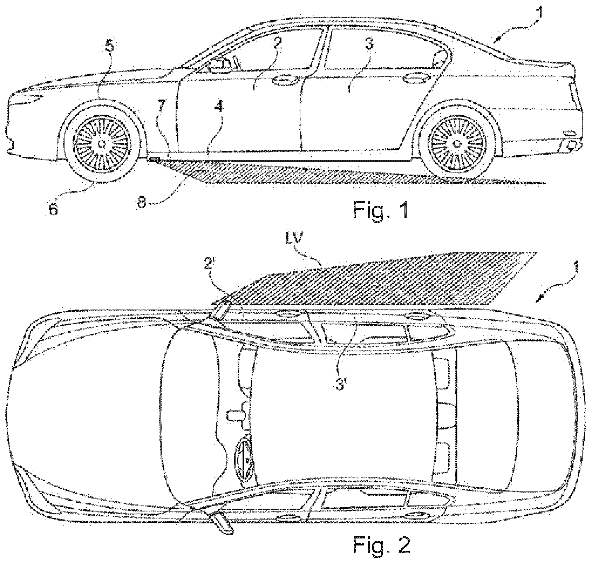

Fig. 1 zeigt eine Seitenansicht des Kraftfahrzeugs in der Form des PKWs 1. Der PKW umfasst auf der dargestellten linken Seite eine Fahrertür 2 sowie eine Fondtür 3. Analog sind auf der gegenüberliegenden Seite des Fahrzeugs (Fig. 2) eine Beifahrertür 2' und eine dahinter liegende Fondtür 3' vorgesehen. In der Ausführungsform der Fig. 1 ist in dem Türschweller 4 unterhalb der Türen 2 und 3 eine Umfeldbeleuchtungseinrichtung mit einem Projektionsmodul 7 vorgesehen. Diese Beleuchtungseinrichtung befindet sich am vorderen Ende des Türschwellers im Bereich des Radkastens 5, der das Rad 6 umgibt. Das Projektionsmodul der Umfeldbeleuchtungseinrichtung umfasst ein Array aus Mikrolinsen, welches gezielt verschiedene Lichtverteilungen neben der Tür 2 bzw. neben der Tür 3 des Kraftfahrzeugs generieren kann.

Das Projektionsmodul 7 verwendet die Technologie des Projektionsdisplays, das in den bereits oben genannten Druckschriften DE 10 2009 024 894 A1 bzw. DE 10 2011 076 083 A1 beschrieben ist. In diesem Projektionsdisplay wird eine Mehrkanaloptik mit einem zweidimensionalen Array von Projektionsoptiken umfassend Mikrolinsen und Objektstrukturen zur Projektion eines Bildes genutzt. Im Unterschied zu diesem Projektionsdisplay ist in dem Projektionsmodul 7 das Array aus Projektionsoptiken in zwei Teilarrays mit unterschiedlichen Projektionsoptiken aufgeteilt. Die einzelnen Teilarrays können separat mit entsprechenden LEDs beleuchtet werden. Bei der Beleuchtung des einen Teilarrays wird am Boden neben dem Kraftfahrzeug die in Fig. 2 gezeigte Lichtverteilung in der Form eines Lichtmusters LV erzeugt, wohingegen bei der Beleuchtung des anderen Teilarrays eine homogene Lichtverteilung mit im Wesentlichen konstanter Lichtintensität am Boden neben dem Kraftfahrzeug generiert wird.

Das Projektionsmodul 7 ist sehr kompakt und weist Abmessungen im Zentimeterbereich auf. In einer Variante liegen die Breite, Höhe und Länge des Projektionsmoduls jeweils bei in etwa 15 mm. Jede Projektionsoptik eines jeweiligen Teilarrays des Projektionsmoduls enthält die gleiche Objektstruktur und erzeugt somit das gleiche Einzelbild, und das Gesamtbild setzt sich aus der Überlagerung dieser Einzelbilder zusammen. Die Objektstrukturen der einzelnen Teilarrays sind dabei verschieden, so dass die Generierung sowohl eines Lichtmusters als auch einer homogenen Lichtverteilung möglich ist. Wie bereits erwähnt, ist in Fig. 1 bzw. Fig. 2 die Generierung des Lichtmusters LV gezeigt, das auf den Boden neben den Türen 2 und 2' projiziert wird. In Fig. 1 ist die Ausbreitungsrichtung des auf den Boden geworfenen Lichts des Projektionsmoduls 7 mit Bezugszeichen 8 bezeichnet.

Das auf den Boden neben dem Fahrzeug projizierte Lichtmuster LV ist aus der Draufsicht der Fig. 2 ersichtlich und erzeugt den Effekt eines Lichtteppichs. Dabei ist zu beachten, dass die Lichtverteilung anders als in Fig. 1 rechts neben dem Fahrzeug 1 benachbart zu den Türen 2' und 3' wiedergegeben ist. Dies ist möglich, denn im Kraftfahrzeug sind symmetrisch auf der rechten und linken Seite Projektionsmodule 7 verbaut. Mit anderen Worten werden sowohl auf der linken Seite als auch auf der rechten Seite des Fahrzeugs benachbart zu den Einstiegstüren entsprechend gespiegelte Lichtverteilungen erzeugt. Aus Übersichtlichkeitsgründen ist in Fig. 2 nur die Lichtverteilung benachbart zu den Türen 2' und 3' wiedergegeben. In dem Ausführungsbeispiel der Fig. 2 stellt das Lichtmuster LV ein Muster aus parallelen Streifen dar, welche schräg zur Längsachse des Fahrzeugs verlaufen. Die Streifen sind dunkel dargestellt und repräsentieren in der tatsächlichen Lichtverteilung helle Balken auf dem Boden neben dem Fahrzeug. Wie aus Fig. 2 ersichtlich wird, weitet sich die Lichtverteilung von der vorderen Tür 2' hin zum Bereich hinter der Tür 3' auf. Man erkennt ferner, dass das Streifmuster im hinteren Bereich verschwimmt, wobei dieser Effekt durch eine abnehmende Helligkeit der Streifen generiert wird.

Das dargestellte Streifenmuster ist lediglich beispielhaft für ein generiertes Lichtmuster, und es können beliebige andere Muster erzeugt werden. Insbesondere kann durch die Lichtverteilung gegebenenfalls auch ein Punktmuster wiedergegeben werden. Darüber hinaus können die Streifen des Streifenmusters auch in eine andere Richtung, z.B. parallel zur Fahrzeuglängsachse oder senkrecht zu dieser verlaufen. In der Ausführungsform der Fig. 2 ist das Lichtmuster ein sog. "Welcome-Element", bei dem die Lichtprojektion am Boden vor dem Fahrzeug bei Annäherung des Fahrers bzw. eines Fahrpassagiers an das Fahrzeug erzeugt wird.

Mit dem Projektionsmodul 7 kann durch Beleuchtung des anderen Teilarrays des Projektionsoptik-Arrays auch eine homogene Lichtverteilung generiert werden, deren räumliche Ausdehnung der in Fig. 2 gezeigten Lichtverteilung LV entspricht. Mit dieser homogenen Lichtverteilung wird eine sehr gute Ausleuchtung des Bodens vor den Fahrzeugtüren bewirkt. Demzufolge kann darauf verzichtet werden, eine herkömmliche Türbeleuchtung in der Form von LEDs in entsprechenden Türgriffen im Fahrzeug vorzusehen, denn die mit dem Projektionsmodul generierte homogene Lichtverteilung leuchtet den Bereich vor den Türen des Fahrzeugs bereits ausreichend aus. Das Projektionsmodul hat somit den wesentlichen Vorteil, dass es neben der Funktion als Welcome-Element auch die Funktion einer herkömmlichen optischen Türbeleuchtung übernimmt, so dass eine solche Türbeleuchtung nicht mehr separat im Kraftfahrzeug vorgesehen werden muss.

Gegebenenfalls kann das Lichtmuster LV bzw. die entsprechende homogene Lichtverteilung z.B. auch nur im Bereich der Fondtür 3 bzw. 3' generiert werden. In diesem Fall kann das Projektionsmodul an der vorderen Kante der Fondtür angeordnet sein. Darüber hinaus wird durch die Anordnung des Projektionsmoduls im Türschweller 4 sichergestellt, dass es beim Öffnen der Türen nicht zur einer Abschattung des Lichtmusters bzw. der homogenen Lichtverteilung kommt, d.h. die Lichtverteilung ist unabhängig von der Position der Türen immer am Boden des Fahrzeugs sichtbar.

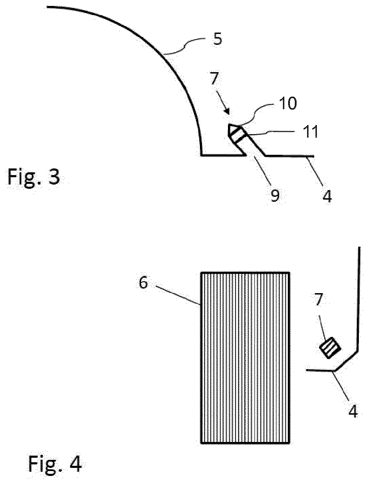

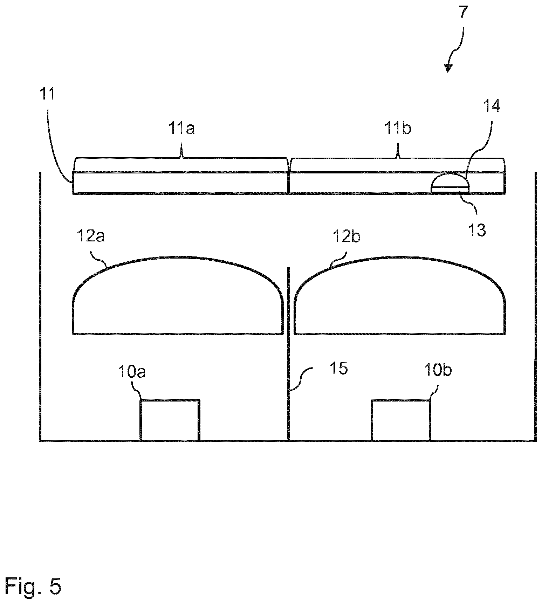

Fig. 3 zeigt im Schnitt eine Detailansicht des Projektionsmoduls aus Fig. 1. Das Modul 7, das benachbart zum Radkasten 5 im Türschweller 4 integriert ist, umfasst ein schematisch angedeutetes Leuchtmittel 10 mit zwei LEDs, wie weiter unten anhand von Fig. 5 näher beschrieben wird. An das Leuchtmittel 10 schließt sich die mehrkanalige Projektionsoptik in der Form eines Mikrolinsenarrays 11 an. Das Array ist wiederum nur schematisch angedeutet und wird ebenfalls anhand von Fig. 5 näher erläutert. Gemäß Fig. 3 ist das Projektionsmodul in einem schräg nach hinten verlaufenden Lichtschacht 9 angeordnet, so dass sichergestellt wird, dass die Lichtquelle nicht direkt eingesehen werden kann, wodurch gesetzlichen Anforderungen Rechnung getragen wird.

Fig. 4 zeigt nochmals im Schnitt eine Ansicht auf das Projektionsmodul aus Fig. 3 gesehen in Längsrichtung des Fahrzeugs von vorne nach hinten. Man erkennt in Fig. 4 neben dem Modul 7 das vordere Rad 6 des Fahrzeugs sowie den Türschweller 4. Der Türschweller verläuft dabei in einem Teilabschnitt in einem Winkel von etwa 45° schräg zum Boden. Gegenüber diesem Teilabschnitt befindet sich das lediglich schematisch angedeutete Projektionsmodul 7, wobei aus Übersichtlichkeitsgründen der Lichtschacht nicht wiedergegeben ist. Das Projektionsmodul 7 wird über eine Halteeinrichtung am Türschweller gehalten, wobei der Lichtschacht 9 Teil der Halteeinrichtung ist. Die Halteeinrichtung selbst ist nicht im Detail wiedergegeben. Die Halteeinrichtung kann dabei aus dem Schweller ausgebaut werden, so dass das Projektionsmodul bei einem Defekt durch ein neues ersetzt werden kann. Um Fertigungstoleranzen auszugleichen, ist vorzugsweise eine Justiereinrichtung vorgesehen, mit der die Position des Projektionsmoduls relativ zu dem Lichtschacht in vorbestimmten Grenzen manuell und ggf. auch automatisch über entsprechende Aktuatoren eingestellt werden kann. Hierdurch kann erreicht werden, dass die Lichtverteilung am Boden immer scharf abgebildet wird.

Fig. 5 zeigt in Schnittansicht den detaillierten Aufbau des Projektionsmoduls 7 aus den vorangegangenen Figuren. Das Modul umfasst als Leuchtmittel zwei LEDs 10a und 10b, welche in Fig. 5 in Richtung nach oben abstrahlen. Zur Strahlführung sind oberhalb dieser beiden LEDs 10a und 10b zwei Linsen 12a und 12b vorgesehen. Das aus den Linsen austretende Licht der LEDs fällt auf das Array 11 aus Projektionsoptiken, welches in der Ausführungsform der Fig. 5 in zwei Teilarrays 11a und 11b aufgeteilt ist. Um sicherzustellen, dass das Licht der LED 10a im Wesentlichen nur auf das Teilarray 11a und das Licht der LED 10b im Wesentlichen nur auf das Teilarray 11b fällt, ist zwischen den beiden LEDs eine Blende 15 angeordnet.

Das Array 11 aus Projektionsoptiken ist in Draufsicht von oben kreisförmig ausgestaltet und ist in die beiden halbkreisförmigen Teilarrays 11a und 11b aufgeteilt. Jedes der Teilarrays umfasst eine Vielzahl von Objektstrukturen 13 mit zugeordneten Projektions- bzw. Mikrolinsen 14. Aus Übersichtlichkeitsgründen sind in Fig. 5 nur eine Objektstruktur und eine Projektionslinse dargestellt. Beispielsweise können im gesamten Array ca. 200 solcher Mikrolinsen vorgesehen sein. In jedem der Teilarrays 11a und 11b sind die identischen Objektstrukturen eingebracht, wobei sich jedoch die Objektstrukturen des einen Teilarrays von den Objektstrukturen des anderen Teilarrays unterscheiden.

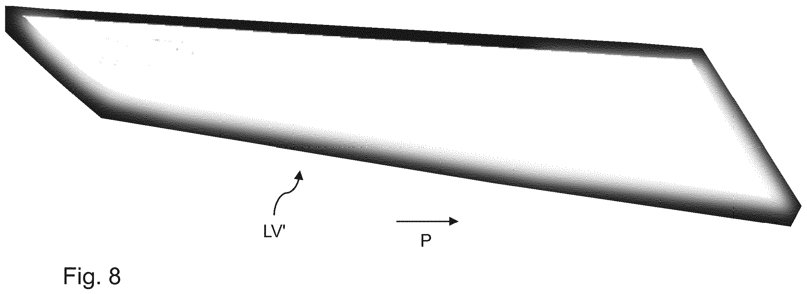

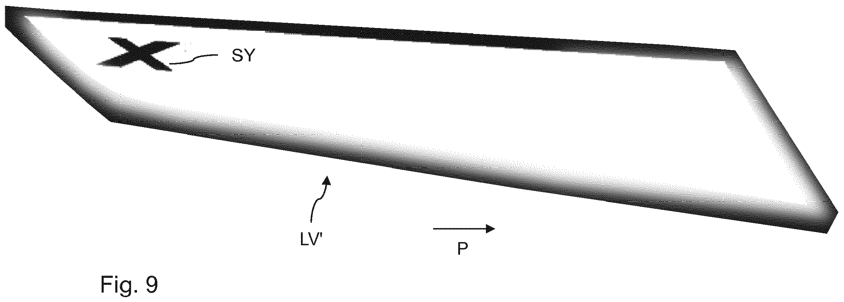

Jede der Objektstrukturen eines Teilarrays wird bei Beleuchtung mit der entsprechenden LED auf dem Boden neben dem Kraftfahrzeug abgebildet und deckt im Wesentlichen die Fläche der gesamten zu erzeugenden Lichtverteilung ab. Die Lichtverteilung wird durch die Überlagerung aller projizierter Objektstrukturen gebildet. Die Objektstrukturen des Teilarrays 11a sind derart ausgestaltet, dass das Lichtmuster LV gebildet wird, welches aus Fig. 2 ersichtlich ist. Im Gegensatz hierzu sind die Objektstrukturen des Teilarrays 11b derart ausgestaltet, dass eine homogene Lichtverteilung LV' gebildet wird, wie aus den weiter unten beschriebenen Figuren 8 und 9 ersichtlich wird.

In der Ausführungsform der Fig. 5 wird zur Erzeugung des Lichtmusters LV lediglich die LED 10a eingeschaltet, wohingegen die LED 10b ausgeschaltet bleibt. Demgegenüber wird zur Generierung der homogenen Lichtverteilung lediglich die LED 10b eingeschaltet, wohingegen die LED 10a ausgeschaltet bleibt. Jedes der Teilarrays 11a und 11b ist somit ausschließlich für die Generierung einer bestimmten Art von Lichtverteilung zuständig. In einer abgewandelten Variante der Erfindung wird zwar auch durch das Teilarray 11a ausschließlich das Lichtmuster LV generiert, jedoch wird die homogene Lichtverteilung durch beide Teilarrays 11a und 11b bei gleichzeitigem Anschalten beider LEDs 10a und 10b gebildet. In diesem Fall sind die Objektstrukturen 13 in dem Teilarray 11b derart ausgestaltet, dass sie komplementär zu den Objektstrukturen des Teilarrays 11a sind, d.h. es wird ein komplementäres Lichtmuster generiert, bei dem die hellen und dunklen Bereiche im Vergleich zum Lichtmuster des Teilarrays 11a vertauscht sind.

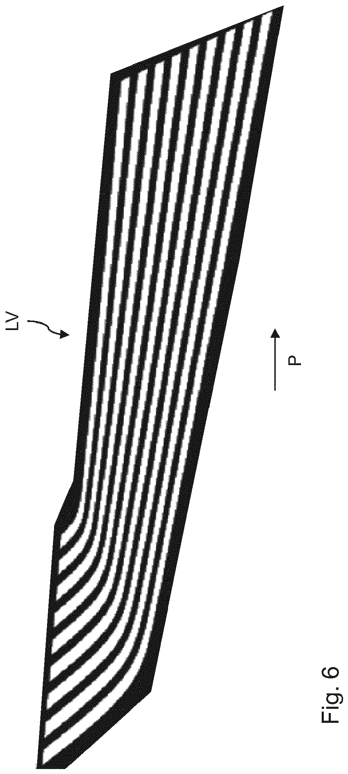

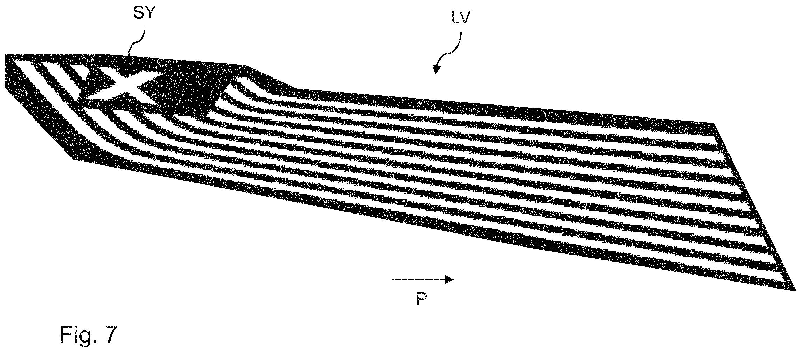

Fig. 6 zeigt eine Variante eines Lichtmusters LV, das mit dem erfindungsgemäßen Projektionsmodul erzeugt werden kann. In Fig. 6 und auch in den weiteren Figuren 7 bis 9 ist der Boden neben dem Kraftfahrzeug in Draufsicht gezeigt, wobei die dunklen Bereiche nicht beleuchtete Flächen des Bodens sind. Ferner ist in Fig. 6 bis Fig. 9 die Längsrichtung des Kraftfahrzeugs von vorne nach hinten durch einen Pfeil P angedeutet. Im Unterschied zu Ausführungsform der Fig. 1 besteht in Fig. 6 das erzeugte Lichtmuster LV aus durchgehend vom Einbauort des Projektionsmoduls in den hinteren Bereich des Kraftfahrzeugs verlaufenden Streifen. Fig. 7 zeigt eine Abwandlung eines Lichtmusters LV, das mit dem Projektionsmodul generiert werden kann. Im Unterschied zu Fig. 6 ist das Lichtmuster mit einem Symbol SY überlagert, welches den Buchstaben "X" darstellt.

Fig. 8 zeigt eine Variante einer homogenen Lichtverteilung LV', die mit dem erfindungsgemäßen Projektionsmodul erzeugt werden kann. Wie man erkennt, weist die Lichtverteilung einen durchgehend hellen Bereich mit im Wesentlichen konstanter Intensität auf. Die Fläche des hellen Bereichs entspricht im Wesentlichen der Fläche, die durch das Lichtmuster LV der Fig. 6 abgedeckt wird. Vorzugsweise kann das Projektionsmodul sowohl das Lichtmuster der Fig. 6 als auch die homogene Lichtverteilung der Fig. 8 generieren. Zur Erzeugung der homogenen Lichtverteilung LV' aus Fig. 8 kann in einer Variante nur das Teilarray 11b des Projektionsmoduls aus Fig. 5 verwendet werden. Mit anderen Worten sind die Objektstrukturen in diesem Teilarray derart ausgestaltet, dass sie allein für die Erzeugung der homogenen Lichtverteilung verantwortlich sind. In einer abgewandelten Variante können die Objektstrukturen des Teilarrays 11b auch komplementär zu den Objektstrukturen des Teilarrays 11a sein. In diesem Fall wird durch Anschalten der beiden LEDs 10a und 10b die homogene Lichtverteilung LV' durch Überlagerung der beiden komplementären Lichtverteilungen erzeugt.

Fig. 9 zeigt eine weitere Abwandlung einer homogenen Lichtverteilung LV', welche in dem Projektionsmodul vorzugsweise neben dem Lichtmuster LV der Fig. 7 generiert wird. Die homogene Lichtverteilung LV' ist analog zum Lichtmuster der Fig. 7 mit einem Symbol SY in der Form eines "X" überlagert. Diese Art der Lichtverteilung kann ausschließlich durch separat beleuchtete Objektstrukturen in den entsprechenden Teilarrays 11a und 11b erzeugt werden.

Die Kriterien, welche festlegen, ob ein Lichtmuster LV oder eine homogene Lichtverteilung LV' durch das Projektionsmodul 7 generiert werden soll, können unterschiedlich ausgestaltet sein. Da der Boden neben dem Kraftfahrzeug durch die homogene Lichtverteilung besser sichtbar wird, wird diese Lichtverteilung vorzugsweise bei Dunkelheit bzw. bei Regen verwendet, damit die ein- oder aussteigende Person gut den Bereich vor der Fahrzeugtür und etwaige Pfützen erkennen kann. Somit kann die Generierung der homogenen Lichtverteilung an die Detektion entsprechender Sensoren, wie z.B. eines Helligkeitssensors oder eines Regensensors, gekoppelt sein. Gegebenenfalls besteht auch die Möglichkeit, dass durch einen Benutzer über eine Benutzerschnittstelle im Kraftfahrzeug festgelegt werden kann, ob bzw. unter welchen Bedingungen die homogene Lichtverteilung bzw. das Lichtmuster angeschaltet werden soll.

Die im Vorangegangenen beschriebenen Ausführungsformen der Erfindung weisen eine Reihe von Vorteilen auf. Dadurch, dass das im Kraftfahrzeug verbaute Projektionsmodul sowohl ein Lichtmuster als auch eine homogene Lichtverteilung generieren kann, wird die Möglichkeit geschaffen, dass das Projektionsmodul auch die Funktionalität einer herkömmlichen optischen Vorfeld- bzw. Türbeleuchtung übernimmt. Es kann somit auf diese optische Vorfeldbeleuchtung verzichtet werden, wodurch Kosten eingespart werden. Ferner wird durch das Projektionsmoduls eine sehr gut sichtbare Lichtverteilung sowohl in der Form eines Lichtmusters als auch in der Form eines homogenen Lichtfelds in der Umgebung des Kraftfahrzeugs generiert. Die Lichtverteilungen sind dabei sowohl bei offenen als auch geschlossenen Fahrzeugtüren sichtbar. Durch die Verwendung eines kompakten Projektionsmoduls wird darüber hinaus wenig Bauraum benötigt, und auch bei einer Verschmutzung bzw. teilweisen Verdeckung des Leuchtmittels des Projektionsmoduls bleibt das generierte Lichtmuster bzw. die homogene Lichtverteilung sichtbar.

### Bezugszeichenliste

- 1: Kraftfahrzeug
- 2, 2', 3, 3': Fahrzeugtüren
- 4: Türschweller
- 5: Radkasten
- 6: Rad
- 7: Projektionsmodul
- 8: Lichtausbreitung
- LV: Lichtmuster
- LV': homogene Lichtverteilung
- 9: Lichtschacht
- 10: Leuchtmittel
- 10a, 10b: LEDs
- 11: Array aus Projektionsoptiken
- 11a, 11b: Teilarrays
- 12a, 12b: Linsen
- 13: Objektstruktur
- 14: Projektionslinse
- 15: Blende
- P: Pfeil
- SY: Symbol

## Patentansprüche

1. Umfeldbeleuchtungseinrichtung für ein Kraftfahrzeug, wobei die Umfeldbeleuchtungseinrichtung zur Erzeugung einer Lichtverteilung (LV, LV') auf dem Boden in der Umgebung des Kraftfahrzeugs (1) vorgesehen ist und ein Projektionsmodul (7) aufweist, das ein Leuchtmittel (10) mit einer Anzahl von Lichtquellen (10a, 10b) und ein Array (11) aus Projektionsoptiken umfasst, wobei eine jeweilige Projektionsoptik eine Objektstruktur (13) und eine zugehörige Projektionslinse (14) umfasst, so dass bei Beleuchtung des Arrays (11) mit dem Leuchtmittel (10) die Objektstrukturen (13) durch die zugehörigen Projektionslinsen (14) auf den Boden projiziert werden können und hierdurch die Lichtverteilung (LV, LV') erzeugt werden kann, **dadurch gekennzeichnet, dass**
- das Array (11) aus Projektionsoptiken mehrere Teilarrays (11a, 11b) umfasst, welche separat mit zumindest einer dem jeweiligen Teilarray (11a, 11b) zugeordneten Lichtquelle (10a, 10b) des Leuchtmittels (10) beleuchtbar sind;
- das Array (11) zumindest zwei unterschiedliche Arten von Teilarrays (11a, 11b) aufweist, welche bei Beleuchtung mit der zumindest einen zugeordneten Lichtquelle (10a, 10b) unterschiedliche Projektionen auf dem Boden generieren, wobei die Objektstrukturen (13) der Projektionsoptiken innerhalb eines jeweiligen Teilarrays (11a, 11b) identisch sind, sich jedoch die Objektstrukturen (13) der Projektionsoptiken der unterschiedlichen Arten von Teilarrays (11a, 11b) voneinander unterscheiden;
- eine erste Anzahl von Teilarrays (11a) und eine zweite Anzahl von Teilarrays (11b) vorgesehen sind, welche derart ansteuerbar sind, dass bei angeschalteter Umfeldbeleuchtungseinrichtung ausschließlich die erste Anzahl von Teilarrays (11a) durch Anschalten der zugeordneten Lichtquelle oder Lichtquellen (10a) aktiviert sein kann oder ausschließlich die zweite Anzahl von Teilarrays (11b) durch Anschalten der zugeordneten Lichtquelle oder Lichtquellen (10b) aktiviert sein kann;
- die erste Anzahl von Teilarrays (11a) derart ausgestaltet ist, dass bei dessen Aktivierung ein Lichtmuster (LV) auf dem Boden erzeugt werden kann, und die zweite Anzahl von Teilarrays (11b) derart ausgestaltet ist, dass bei dessen Aktivierung eine homogene Lichtverteilung (LV') auf dem Boden erzeugt werden kann.

2. Umfeldbeleuchtungseinrichtung nach Anspruch 1, **dadurch gekennzeichnet, dass** im Projektionsmodul (7) eine oder mehrere Blenden (15) vorgesehen sind, welche derart angeordnet sind, dass das Licht der zumindest einen zugeordneten Lichtquelle (10a, 10b) eines jeweiligen Teilarrays (11a, 11b) ausschließlich auf das jeweilige Teilarray (11a, 11b) fällt.

3. Umfeldbeleuchtungseinrichtung nach einem der vorhergehenden Ansprüche, **dadurch gekennzeichnet, dass** die erste Anzahl von Teilarrays (11a) aus einem oder mehreren gleichen Teilarrays (10a) einer ersten Art besteht, welche bei Beleuchtung mit der oder den zugeordneten Lichtquellen (10a) das Lichtmuster (LV) erzeugen können, und die zweite Anzahl von Teilarrays (11b) aus einem oder mehreren gleichen Teilarrays (11b) einer zweiten Art besteht, welche bei Beleuchtung mit der oder den zugeordneten Lichtquellen (10a) die homogene Lichtverteilung (LV') erzeugen können.

4. Umfeldbeleuchtungseinrichtung nach einem der vorhergehenden Ansprüche, **dadurch gekennzeichnet, dass** die erste Anzahl von Teilarrays (11a) aus einem oder mehreren gleichen Teilarrays (10a) einer ersten Art besteht, welche bei Beleuchtung mit der oder den zugeordneten Lichtquellen (10a) das Lichtmuster (LV) erzeugen können, und die zweite Anzahl von Teilarrays (10a, 10b) aus der ersten Anzahl von Teilarrays (11a) und einem oder mehreren gleichen Teilarrays (11b) einer zweiten Art besteht, wobei das oder die Teilarrays (11b) der zweiten Art bei Beleuchtung mit der oder den zugeordneten Lichtquellen (10b) ein Lichmuster erzeugen können, das zu dem Lichtmuster (LV) komplementär ist, welches durch das oder die Teilarrays (11a) der ersten Art erzeugt wird, wobei die hellen Bereiche des entsprechenden Lichtmusters in dem komplementären Lichtmuster dunkel sind und dass die dunklen Bereiche des entsprechenden Lichtmusters in dem komplementären Lichtmuster hell sind

5. Umfeldbeleuchtungseinrichtung nach einem der vorhergehenden Ansprüche, **dadurch gekennzeichnet, dass** das Lichtmuster (LV) und die homogene Lichtverteilung (LV') im Wesentlichen die gleiche Fläche am Boden abdecken können.

6. Umfeldbeleuchtungseinrichtung nach einem der vorhergehenden Ansprüche, **dadurch gekennzeichnet, dass** zur Generierung unterschiedlicher Lichtmuster mehrere erste Anzahlen von Teilarrays (11a) vorgesehen sind, welche derart ansteuerbar sind, dass bei angeschalteter Umfeldbeleuchtungseinrichtung ausschließlich eine erste Anzahl von Teilarrays (11a) durch Anschalten der zugeordneten Lichtquelle oder Lichtquellen (10a) aktiviert sein kann.

7. Kraftfahrzeug, umfassend eine Umfeldbeleuchtungseinrichtung nach einem der Ansprüche 1 bis 6.

8. Kraftfahrzeug nach Anspruch 7, **dadurch gekennzeichnet, dass** das Projektionsmodul (7) in einem sich in die Karosserie des Kraftfahrzeugs (1) erstreckenden Lichtschacht (9) angeordnet ist.

9. Kraftfahrzeug nach Anspruch 7 oder 8, **dadurch gekennzeichnet, dass** die Einbauposition des Projektionsmoduls (7) im Kraftfahrzeug (1) justiert werden kann.

10. Kraftfahrzeug nach einem der Ansprüche 7 bis 9, **dadurch gekennzeichnet, dass** das Lichtmuster (LV) ein Streifenmuster ist, wobei vorzugsweise die Dichte der Streifen in eine vorbestimmte Richtung am Boden mit zunehmendem Abstand des Streifenmusters von der Einbauposition des Projektionsmoduls (7) im Kraftfahrzeug (1) abnimmt.

11. Kraftfahrzeug nach einem der Ansprüche 7 bis 10, **dadurch gekennzeichnet, dass** sich das Lichtmuster (LV) und/oder die homogene Lichtverteilung (LV') entlang einer vorbestimmten Richtung am Boden mit zunehmendem Abstand des Lichtmusters (LV) und/oder der homogenen Lichtverteilung von der Einbauposition des Projektionsmoduls im Kraftfahrzeug (1) aufweiten.

12. Kraftfahrzeug nach einem der Ansprüche 7 bis 11, **dadurch gekennzeichnet, dass** das Anschalten der Umfeldbeleuchtungseinrichtung an ein Entriegeln einer Zentralverriegelung und/oder an ein Öffnen einer Zugangstür des Kraftfahrzeugs (1) gekoppelt ist und/oder dass die Aktivierung der ersten und/oder der zweiten Anzahl von Teilarrays (11a, 11b) durch ein Aufdimmen der zugeordneten Lichtquelle oder Lichtquellen (10a, 10b) erfolgt.

13. Kraftfahrzeug nach einem der Ansprüche 7 bis 12, **dadurch gekennzeichnet, dass** im Kraftfahrzeug ein Sensor vorgesehen ist, mit dem Regen und/oder Dunkelheit detektiert wird, wobei im Falle von Regen und/oder Dunkelheit bei Anschalten der Umfeldbeleuchtungseinrichtung ausschließlich die homogene Lichtverteilung (LV') durch Aktivierung der zweiten Anzahl von Teilarrays (11b) erzeugt wird.

14. Kraftfahrzeug nach einem der Ansprüche 7 bis 13, **dadurch gekennzeichnet, dass** die Umfeldbeleuchtungseinrichtung über eine Benutzerschnittstelle im Kraftfahrzeug dahingehend konfigurierbar ist, ob die homogene Lichtverteilung (LV') oder das Lichtmuster (LV) beim Anschalten der Umfeldbeleuchtungseinrichtung erzeugt werden soll.

15. Kraftfahrzeug nach einem der Ansprüche 7 bis 14, **dadurch gekennzeichnet, dass** das Projektionsmodul (7) derart im Bereich einer Zugangstür (2, 2', 3, 3') des Kraftfahrzeugs (1) angebracht ist, dass das Lichtmuster (LV) und/oder die homogene Lichtverteilung (LV') im Öffnungsbereich der Zugangstür (2) erzeugt werden, wobei das Lichtmuster (LV) und/oder die homogene Lichtverteilung (LV') vorzugsweise nicht durch das Öffnen der Zugangstür (2, 2', 3, 3') verändert werden.

16. Kraftfahrzeug nach Anspruch 15, **dadurch gekennzeichnet, dass** die Zugangstür (2, 2', 3, 3') eine Personeneinstiegstür ist.

17. Kraftfahrzeug nach einem der Ansprüche 7 bis 16, **dadurch gekennzeichnet, dass** das Projektionsmodul (7) in einem Türschweller (4) des Kraftfahrzeugs (1) vorgesehen ist, insbesondere an einer Einbauposition, welche in Längsrichtung des Kraftfahrzeugs vor einer Personeneinstiegstür (2, 2', 3, 3') liegt.

18. Kraftfahrzeug nach einem der Ansprüche 7 bis 17, **dadurch gekennzeichnet, dass** das Projektionsmodul (7) derart im Kraftfahrzeug (1) angeordnet ist, dass sich das Lichtmuster (LV) und/oder die homogene Lichtverteilung (LV') auf einer Seite des Kraftfahrzeugs (1) im Wesentlichen entlang einer Fahrer- oder Beifahrereinstiegstür und einer dahinter liegenden Einstiegstür für Fond-Passagiere erstrecken.

## Claims

1. Environment illumination device for a motor vehicle, wherein the environment illumination device is provided for producing a light distribution (LV, LV') on the ground in the area surrounding the motor vehicle (1) and has a projection module (7) which comprises a light-emitting means (10) with a number of light sources (10a, 10b) and an array (11) of projection optical units, wherein a respective projection optical unit comprises an object structure (13) and an associated projection lens (14), such that, upon illumination of the array (11) with the light-emitting means (10), the object structures (13) can be projected onto the ground by the associated projection lenses (14) and the light distribution (LV, LV') can thus be produced, **characterized in that**
- the array (11) of projection optical units comprises a plurality of subarrays (11a, 11b), which are illuminable separately with at least one light source (10a, 10b) of the light-emitting means (10) that is associated with the respective subarray (11a, 11b);
- the array (11) has at least two different types of subarrays (11a, 11b) which, upon illumination with the at least one associated light source (10a, 10b), generate different projections on the ground, wherein the object structures (13) of the projection optical units within a respective subarray (11a, 11b) are identical, but the object structures (13) of the projection optical units of the different types of subarrays (11a, 11b) differ from one another;
- a first number of subarrays (11a) and a second number of subarrays (11b) are provided, which are controllable such that, when the environment illumination device is switched on, only the first number of subarrays (11a) can be activated by switching on the associated light source or light sources (10a) or only the second number of subarrays (11b) can be activated by switching on the associated light source or light sources (10b);
- the first number of subarrays (11a) is configured such that, upon their activation, a light pattern (LV) can be produced on the ground, and the second number of subarrays (11b) is configured such that, upon their activation, a homogeneous light distribution (LV') can be produced on the ground.

2. Environment illumination device according to Claim 1, **characterized in that** one or more screens (15) are provided in the projection module (7), which are arranged such that the light of the at least one associated light source (10a, 10b) of a respective subarray (11a, 11b) strikes only the respective subarray (11a, 11b).

3. Environment illumination device according to either of the preceding claims, **characterized in that** the first number of subarrays (11a) consists of one or more identical subarrays (10a) of a first type which can produce the light pattern (LV) upon illumination with the associated light source or light sources (10a),
and the second number of subarrays (11b) consists of one or more identical subarrays (11b) of a second type, which can produce the homogeneous light distribution (LV') upon illumination with the associated light source or light sources (10a).

4. Environment illumination device according to any of the preceding claims, **characterized in that** the first number of subarrays (11a) consists of one or more identical subarrays (10a) of a first type which can produce the light pattern (LV) upon illumination with the associated light source or light sources (10a),
and the second number of subarrays (10a, 10b) consists of the first number of subarrays (11a) and of one or more identical subarrays (11b) of a second type, with the subarray or subarrays (11b) of the second type being able to produce, upon illumination with the associated light source or light sources (10b), a light pattern that is complementary to the light pattern (LV) which is produced by the subarray or subarrays (11a) of the first type, wherein the bright regions of the corresponding light pattern are dark in the complementary light pattern and **in that** the dark regions of the corresponding light pattern are bright in the complementary light pattern.

5. Environment illumination device according to any of the preceding claims, **characterized in that** the light pattern (LV) and the homogeneous light distribution (LV') can cover substantially the same surface area on the ground.

6. Environment illumination device according to any of the preceding claims, **characterized in that**, for generating different light patterns, a plurality of first numbers of subarrays (11a) are provided, which are controllable such that, when the environment illumination device is switched on, only a first number of subarrays (11a) can be activated by switching on the associated light source or light sources (10a).

7. Motor vehicle comprising an environment illumination device according to any of Claims 1 to 6.

8. Motor vehicle according to Claim 7, **characterized in that** the projection module (7) is arranged in a light shaft (9) that extends into the body of the motor vehicle (1) .

9. Motor vehicle according to Claim 7 or 8, **characterized in that** the installation position of the projection module (7) in the motor vehicle (1) can be adjusted.

10. Motor vehicle according to any of Claims 7 to 9, **characterized in that** the light pattern (LV) is a stripe pattern, wherein the density of the stripes in a predetermined direction on the ground preferably reduces with increasing distance of the stripe pattern from the installation position of the projection module (7) in the motor vehicle (1).

11. Motor vehicle according to any of Claims 7 to 10, **characterized in that** the light pattern (LV) and/or the homogeneous light distribution (LV') expand(s) along a predetermined direction on the ground with increasing distance of the light pattern (LV) and/or of the homogeneous light distribution from the installation position of the projection module in the motor vehicle (1) .

12. Motor vehicle according to any of Claims 7 to 11, **characterized in that** switching on of the environment illumination device is coupled to unlocking a central locking system and/or to opening of an access door of the motor vehicle (1), and/or **in that** activation of the first and/or the second number of subarrays (11a, 11b) is effected by way of dimming up the associated light source or light sources (10a, 10b).

13. Motor vehicle according to any of Claims 7 to 12, **characterized in that** a sensor is provided in the motor vehicle that is used to detect rain and/or darkness, wherein in the case of rain and/or darkness only the homogeneous light distribution (LV') is produced by activating the second number of subarrays (11b) upon switching on of the environment illumination device.

14. Motor vehicle according to any of Claims 7 to 13, **characterized in that** the environment illumination device is configurable, via a user interface in the motor vehicle, as to whether the homogeneous light distribution (LV') or the light pattern (LV) should be produced when switching on the environment illumination device.

15. Motor vehicle according to any of Claims 7 to 14, **characterized in that** the projection module (7) is mounted in the region of an access door (2, 2', 3, 3') of the motor vehicle (1) such that the light pattern (LV) and/or the homogeneous light distribution (LV') is/are produced in the opening region of the access door (2), with the light pattern (LV) and/or the homogeneous light distribution (LV') preferably not being changed by the access door (2, 2', 3, 3') being opened.

16. Motor vehicle according to Claim 15, **characterized in that** the access door (2, 2', 3, 3') is a person entry door.

17. Motor vehicle according to any of Claims 7 to 16, **characterized in that** the projection module (7) is provided in a door sill (4) of the motor vehicle (1), in particular at an installation position that is located, in the longitudinal direction of the motor vehicle, in front of a person entry door (2, 2', 3, 3').

18. Motor vehicle according to any of Claims 7 to 17, **characterized in that** the projection module (7) is arranged in the motor vehicle (1) such that the light pattern (LV) and/or the homogeneous light distribution (LV') extend(s) on one side of the motor vehicle (1) substantially along a driver or passenger entry door and an entry door for backseat passengers that is located behind it.

## Revendications

1. Dispositif d'éclairage de proximité pour un véhicule automobile, dans lequel le dispositif d'éclairage de proximité est prévu pour créer une distribution de lumière (LV, LV') sur le sol dans l'environnement du véhicule automobile (1) et présente un module de projection (7) qui comprend un moyen d'éclairage (10) pourvu d'un certain nombre de sources lumineuses (10a, 10b) et un réseau (11) d'optiques de projection, dans lequel une optique de projection respective comprend une structure d'objet (13) et une lentille de projection associée (14) de sorte que lorsque le réseau (11) est éclairé par le moyen d'éclairage (10), les structures d'objet (13) peuvent être projetées sur le sol par les lentilles de projection associées (14) et la distribution de lumière (LV, LV') peut ainsi être créée,
**caractérisé en ce que**
- le réseau (11) composé d'optiques de projection comprend plusieurs réseaux partiels (11a, 11b) qui peuvent être éclairés séparément par au moins une source lumineuse (10a, 10b) du moyen d'éclairage (10), associée au réseau partiel respectif (11a, 11b) ;
- le réseau (11) présente au moins deux types différents de réseaux partiels (11a, 11b) qui créent différentes projections sur le sol lors de l'éclairage par ladite au moins une source lumineuse associée (10a, 10b), les structures d'objet (13) des optiques de projection étant identiques à l'intérieur d'un réseau partiel respectif (11a, 11b) mais les structures d'objet (13) des optiques de projection des différents types de réseaux partiels (11a, 11b) étant différentes les unes des autres ;
- un premier nombre de réseaux partiels (11a) et un deuxième nombre de réseaux partiels (11b) sont prévus qui peuvent être pilotés de telle sorte que lorsque le dispositif d'éclairage de proximité est mis sous tension, seul le premier nombre de réseaux partiels (11a) peut être activé par la mise sous tension de la source lumineuse associée ou des sources lumineuses (10a), ou seul le deuxième nombre de réseaux partiels (11b) peut être activé par la mise sous tension de la source lumineuse associée ou des sources lumineuses (10b) ;
- le premier nombre de réseaux partiels (11a) est configuré de telle sorte que lorsqu'il est activé, un motif lumineux (LV) peut être crée sur le sol, et le deuxième nombre de réseaux partiels (11b) est configuré de telle sorte que lorsqu'il est activé, une distribution de lumière (LV') homogène peut être créée sur le sol.

2. Dispositif d'éclairage de proximité selon la revendication 1, **caractérisé en ce que** dans le module de projection (7), un ou plusieurs diaphragmes (15) sont prévus qui sont disposés de telle sorte que la lumière de ladite au moins une source lumineuse associée (10a, 10b) d'un réseau partiel respectif (11a, 11b) ne tombe que sur le réseau partiel respectif (11a, 11b) .

3. Dispositif d'éclairage de proximité selon l'une quelconque des revendications précédentes, **caractérisé en ce que** le premier nombre de réseaux partiels (11a) est composé d'un ou de plusieurs réseaux partiels identiques (10a) d'un premier type qui peuvent créer le motif lumineux (LV) lorsqu'ils sont éclairés par la ou les sources lumineuses associées (10a),
et le deuxième nombre de réseaux partiels (11b) est composé d'un ou de plusieurs réseaux partiels identiques (11b) d'un deuxième type qui peuvent créer la distribution de lumière homogène (LV') lorsqu'ils sont éclairés par la ou les sources lumineuses associées (10a).

4. Dispositif d'éclairage de proximité selon l'une quelconque des revendications précédentes, **caractérisé en ce que** le premier nombre de réseaux partiels (11a) est composé d'un ou de plusieurs réseaux partiels identiques (10a) d'un premier type qui peuvent créer le motif lumineux (LV) lorsqu'ils sont éclairés par la ou les sources lumineuses associées (10a),
et le deuxième nombre de réseaux partiels (10a, 10b) est composé du premier nombre de réseaux partiels (11a) et d'un ou de plusieurs réseaux partiels identiques (11b) d'un deuxième type, dans lequel le ou les réseaux partiels (11b) du deuxième type, lorsqu'ils sont éclairés par la ou les sources lumineuses associées (10b), peuvent créer un motif lumineux qui est complémentaire du motif lumineux (LV) qui est crée par le ou les réseaux partiels (11a) du premier type, dans lequel les zones claires du motif lumineux correspondant sont sombres dans le motif lumineux complémentaire, et **en ce que** les zones sombres du motif lumineux correspondant sont claires dans le motif lumineux complémentaire.

5. Dispositif d'éclairage de proximité selon l'une quelconque des revendications précédentes, **caractérisé en ce que** le motif lumineux (LV) et la distribution de lumière homogène (LV') peuvent substantiellement couvrir la même surface au sol.

6. Dispositif d'éclairage de proximité selon l'une quelconque des revendications précédentes, **caractérisé en ce que** pour la création de différents motifs lumineux, plusieurs premiers nombres de réseaux partiels (11a) sont prévus qui peuvent être pilotés de telle sorte que lorsque le dispositif d'éclairage de proximité est mis sous tension, seul un premier nombre de réseaux partiels (11a) peut être activé par la mise sous tension de la source lumineuse associée ou des sources lumineuses (10a).

7. Véhicule automobile, comprenant un dispositif d'éclairage de proximité selon l'une quelconque des revendications 1 à 6.

8. Véhicule automobile selon la revendication 7, **caractérisé en ce que** le module de projection (7) est disposé dans un puits de lumière (9) s'étendant dans la carrosserie du véhicule automobile (1).

9. Véhicule automobile selon la revendication 7 ou 8, **caractérisé en ce que** la position d'installation du module de projection (7) dans le véhicule automobile (1) peut être ajustée.

10. Véhicule automobile selon l'une quelconque des revendications 7 à 9, **caractérisé en ce que** le motif lumineux (LV) est un motif de rayures, dans lequel de préférence la densité des rayures diminue dans une direction prédéterminée au sol avec une distance croissante du motif de rayures par rapport à la position d'installation du module de projection (7) dans le véhicule automobile (1).

11. Véhicule automobile selon l'une quelconque des revendications 7 à 10, **caractérisé en ce que** le motif lumineux (LV) et/ou la distribution de lumière homogène (LV') s'élargissent le long d'une direction prédéterminée au sol avec une distance croissante du motif lumineux (LV) et/ou de la distribution de lumière homogène par rapport à la position d'installation du module de projection dans le véhicule automobile (1).

12. Véhicule automobile selon l'une quelconque des revendications 7 à 11, **caractérisé en ce que** la mise sous tension du dispositif d'éclairage de proximité est couplée à un déverrouillage d'un verrouillage central et/ou à une ouverture d'une porte d'accès du véhicule automobile (1), et/ou **en ce que** l'activation du premier et/ou du deuxième nombre de réseaux partiels (11a, 11b) est effectuée par une variation croissante de la source lumineuse associée ou des sources lumineuses (10a, 10b) .

13. Véhicule automobile selon l'une quelconque des revendications 7 à 12, **caractérisé en ce que** dans le véhicule automobile est prévu un capteur qui détecte la pluie et/ou l'obscurité, dans lequel, en cas de pluie et/ou d'obscurité lorsque le dispositif d'éclairage de proximité est mis sous tension, seule la distribution de lumière homogène (LV') est créée par l'activation du deuxième nombre de réseaux partiels (11b).

14. Véhicule automobile selon l'une quelconque des revendications 7 à 13, **caractérisé en ce que** le dispositif d'éclairage de proximité est configurable par l'intermédiaire d'une interface utilisateur dans le véhicule automobile pour savoir s'il faut créer la distribution de lumière homogène (LV') ou le motif lumineux (LV) lorsque le dispositif d'éclairage de proximité est mis sous tension.

15. Véhicule automobile selon l'une quelconque des revendications 7 à 14, **caractérisé en ce que** le module de projection (7) est fixé dans la zone d'une porte d'accès (2, 2', 3, 3') du véhicule automobile (1) de telle sorte que le motif lumineux (LV) et/ou la distribution de lumière homogène (LV') sont crées dans la zone d'ouverture de la porte d'accès (2), dans lequel le motif lumineux (LV) et/ou la distribution de lumière homogène (LV') ne sont de préférence pas modifiés par l'ouverture de la porte d'accès (2, 2', 3, 3').

16. Véhicule automobile selon la revendication 15, **caractérisé en ce que** la porte d'accès (2, 2', 3, 3') est une portière d'entrée de personnes.

17. Véhicule automobile selon l'une quelconque des revendications 7 à 16, **caractérisé en ce que** le module de projection (7) est prévu dans un bas de marche (4) du véhicule automobile (1), en particulier dans une position d'installation qui se trouve avant une portière d'entrée de personnes (2, 2', 3, 3') dans la direction longitudinale du véhicule automobile.

18. Véhicule automobile selon l'une quelconque des revendications 7 à 17, **caractérisé en ce que** le module de projection (7) est disposé dans le véhicule automobile (1) de telle sorte que le motif lumineux (LV) et/ou la distribution de lumière homogène (LV') s'étendent sur un côté du véhicule automobile (1) substantiellement le long d'une portière d'entrée du conducteur ou du passager et d'une portière d'entrée située derrière celle-ci pour les passagers du fond.
